# FASCICULE DE BREVET EUROPEEN

(11) **EP 0 675 769 B1**
(45) Date de publication et mention de la délivrance du brevet: **04.02.1998**
(21) Numéro de dépôt: 94931632.7
(22) Date de dépôt: 25.10.1994
(51) Int. Cl.: B08B 7/00

(54) **PROCEDE ET DISPOSITIF POUR LE NETTOYAGE D'ELEMENTS SOLIDES**
VERFAHREN UND VORRICHTUNG ZUR REINIGUNG VON FESTEN KÖRPERN
METHOD AND DEVICE FOR CLEANING SOLID ELEMENTS

(30) Priorité: 26.10.1993 FR 9312750
(43) Date de publication de la demande: 11.10.1995
(73) Titulaire: SAINT-GOBAIN EMBALLAGE, 92400 Courbevoie (FR)
(72) Inventeur: VIEL, Charles-Henri, F-71530 Champforgeuil (FR)
(74) Mandataire: Muller, René
(86) Numéro de dépôt international: FR9401244
(87) Numéro de publication internationale: WO9511764

(56) Documents cités:
- FR-A- 2 300 632
- FR-A- 2 641 718
- GB-A- 1 480 714
- GB-A- 2 169 496

## Description

L'invention concerne un procédé de nettoyage d'éléments solides, tels que des moules, et plus particulièrement de nettoyage de moules de verrerie.

Bien que l'invention concerne différentes industries, son exposé se limitera au nettoyage des moules de verrerie. Les moules de verrerie notamment utilisés pour la fabrication de bouteilles ou flacons sont de plusieurs types, il s'agit par exemple des moules ébaucheurs et des moules finisseurs. Ces moules travaillent le plus souvent à des cadences très élevées, c'est-à-dire qu'ils produisent un nombre important de bouteilles ou flacons très rapidement. En cours de fabrication, ces moules et plus particulièrements, les zones venant en contact avec le verre, sont traités par des agents tels que des graisses. En conséquence, ce tue de moules s'encrasse très rapidement et doit donc être nettoyé régulièrement pour obtenir des produits finis de bonne qualité.

Dans les verreries travaillant à des cadences usuelles, les moules ébaucheurs sont nettoyés environ tous les deux jours et les moules finisseurs, environ une fois par semaine.

Les techniques habituellement utilisées pour le nettoyage des moules de verrerie sont de tue mécanique. Il s'agit par exemple des techniques de sablage ou bien de polissage. Il apparait que ces techniques sont tout à fait satisfaisantes du point de vue nettoyage, et permettent d'éliminer toute la couche de salissure qui se dépose lors de l'utilisation.

Par contre, il est apparu que ces traitements sont généralement trop sévères. En effet, simultanément à l'élimination des salissures, ce type de traitements endommage le métal constituant le moule. Un tel endommagement du moule qui correspond à chaque nettoyage à une érosion d'environ 10 microns à la surface du moule à des conséquences néfastes.

En effet, les dimensions de la cavité ou empreinte, c'est-à-dire du lieu où le produit est formé, sont augmentées, ce qui entraîne soit une consommation de verre plus importante pour un même produit soit une variation de la contenance de l'article pour une consommation de verre constante. Les dimensions extérieures des articles sont également modifiées, et ne conviennent plus alors à la demande. De plus, ces déformations conduisent à des problèmes de démoulage qui entraînent généralement des défauts ou une casse des produits finis. Le plus souvent, les produits finis présentent un état de surface qui se dégrade avec le vieillissement du moule. Ces inconvénients conduisent à des coûts d'entretien pour réparation des mornes généralement élevés et à un remplacement prématuré de ces mornes.

Le brevet anglais publié sous le numéro 1 480 714 décrit une méthode de nettoyage permettant d'éliminer des salissures et des graisses sur des articles tels que des moules. Il s'agit d'une technique combinant un bain lessiviel et des ultrasons. Cette technique de nettoyage permettant d'éliminer la couche de salissure sans dégradation de la surface du moule à des cadences compatibles à celles du nettoyage des moules de verrerie.

Le brevet francais publié sous le numéro 2 641 718 décrit une méthode de nettoyage permettant d'éliminer différents types de salissures sur des surfaces par exemple métalliques sans usure ou dégradation du métal. Il s'agit d'une technique de photo ablation par impact laser. Des essais ont montré que l'application de cette méthode au nettoyage des moules de verrerie permet effectivement d'éliminer la couche de salissures sans dégradation de la surface du morne. Par contre, l'application de cette méthode au nettoyage des mornes présente des inconvénients qui la rendent inacceptable d'un point de vue industriel. En effet, le temps nécessaire pour effectuer le nettoyage d'un moule par cette méthode est trop important et n'est pas conciliable avec les cadences nécessaires de nettoyage des moules de verrerie.

Les moules présentent en outre des géométries souvent compliquées qui rendent difficiles leur nettoyage par un rayon laser qui ne peut atteindre tous les recoins et notamment les gorges et les ailettes présentent à la surface extérieure du moule. Les zones des moules permettant l'emboîtement et l'accrochage des différentes parties constituant les moules, les unes aux autres, sont également très difficiles d'accès par un faisceau laser. Le nettoyage de ces zones par une telle technique nécessiterait des manipulations délicates et a priori relativement lentes.

L'invention a pour but un procédé de nettoyage de moules qui n'entraîne aucune dégradation de la surface, qui permet un nettoyage total de la surface et qui soit compatible avec les cadences de nettoyage de moules de l'industrie.

Durant leurs études, les inventeurs ont su mettre en évidence une caractéristique essentielle des salissures ou tout du moins de leur nature. Il est en effet apparu que les salissures présentes sur les moules de verrerie, après leur utilisation, sont de deux types. Le moule est d'une part recouvert sur toute sa surface d'une couche relativement épaisse et molle, constituée plus particulièrement de matières grasses ou organiques, et d'autre part, il est recouvert d'une fine couche de matière minérale résultant certainement de la corrosion du métal du moule. Cette fine couche se trouve directement en contact avec la surface du moule et donc sous la première couche décrite. Par ailleurs, cette fine couche n'apparait que sur la surface du moule en contact avec le verre chaud, c'est-à-dire, au niveau de l'empreinte ou cavité du moule.

Les objectifs énoncés précédemment sont atteints selon l'invention par un procédé de nettoyage d'éléments solides tels que des moules de verrerie, en au moins une étape d'élimination des graisses ou matières organiques suivie d'au moins une étape de nettoyage par photo ablation par impact laser d'au moins une partie de la surface des éléments, selon les revendications 1 et 4.

Selon une variante avantageuse, l'étape de nettoyage par photo ablation par impact laser concerne les surfaces en contact avec le verre chaud.

La première étape peut être réalisée à des cadences relativement rapides et permet d'éliminer toutes les salissures du premier type, c'est-à-dire les graisses ou matières organiques. La seconde étape de nettoyage par impact laser qui est limitée à une partie seulement de la surface et plus particulièrement aux zones de contact avec le verre chaud, c'est-à-dire à l'empreinte ou cavité du moule, permet d'éliminer la fine couche résultant de la corrosion du métal dans cette zone. Cette surface étant limitée et de plus très facile d'accès, ce nettoyage peut s'adapter aux cadences industrielles des verreries.

De façon préférée, l'élimination des graisses ou matières organiques se fait par une technique combinant l'action de bains lessiviels, notamment basiques et l'action d'ultra-sons. Les bains lessiviels sont plus particulièrement des bains contenant de la lessive de soude et des agents tensio-actifs.

De façon préférée également, l'impact laser est obtenu par un rayon laser délivrant une densité de puissance crête comprise entre quelques mégawatts par cm² et quelques dizaines de mégawattes par cm², par impulsion d'une durée comprise entre quelques nanosecondes et quelques dizaines de nanosecondes et possédant une fréquence de tir ajustable de 0 à 30 Hz.

Le procédé ainsi décrit permet d'atteindre les résultats escomptés, c'est-à-dire un nettoyage total de la surface des moules, sans aucune dégradation de ladite surface et un un temps suffisamment rapide pour s'adapter aux cadences requises notamment pour le nettoyage des moules de verrerie.

L'invention propose également un dispositif pour la mise en oeuvre du procédé. Ce dispositif pour le nettoyage d'éléments solides tels que des moules de verrerie comprend d'une part des moyens assurant l'élimination des graisses ou matières organiques des moules et d'autre part un laser associé à des moyens orientant le rayon sur au moins la surface des moules en contact avec le verre chaud.

De façon préférée, les moyens assurant l'élimination des graisses ou matières organiques sont une série de cuves combinant des effets de bains comprenant une base telle que de la lessive de soude et des agents tensio-actifs et d'ultra-sons.

De façon préférée également, le laser est un laser YAG dopé au néodyme, d'une longueur d'onde de 1,O6 microns délivrant une énergie d'environ 500 millijoules par impulsion, d'une durée comprise entre quelques nanosecondes et quelques dizaines de nanosecondes et de préférence entre 1O et 30 nanosecondes, et possédant une fréquence de tir ajustable de 0 à 30 Hz. De préférence encore, la durée d'impulsion est 22 nanosecondes.

Selon un mode de réalisation avantageux, le nettoyage supplémentaire de la surface des moules en contact avec le verre chaud est réalisé à l'aide d'un dispositif permettant un balayage du faisceau laser sur des moules immobiles.

Le dispositif est avantageusement associé à un robot et des organes de transport tels que des paniers, permettant de déplacer les moules dans les différentes cuves puis de les amener en position fixe pour subir le nettoyage par impact laser.

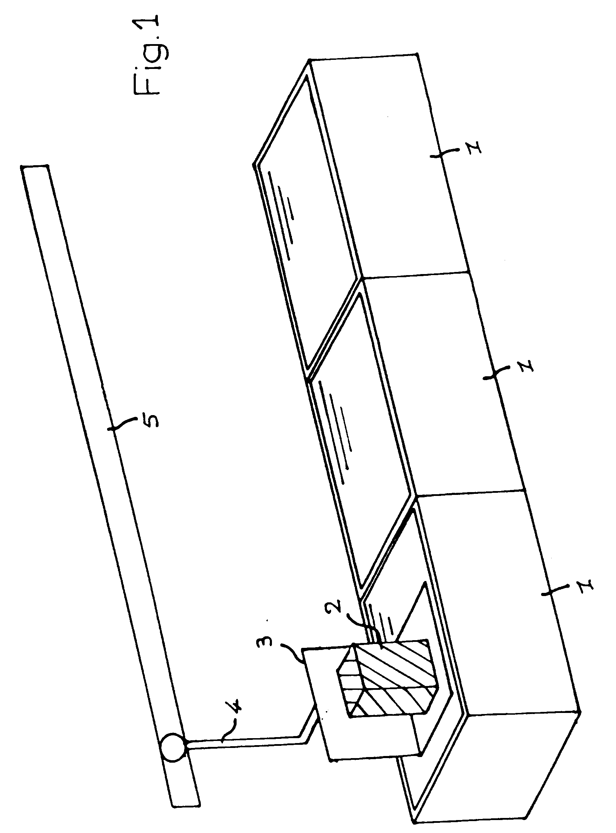

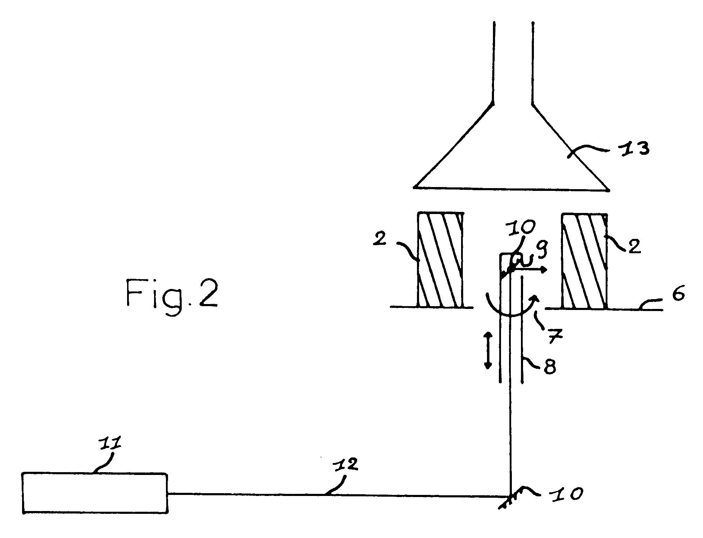

D'autres détails et caractéristiques avantageux de l'invention ressortiront ci-après des exemples de réalisation en référence aux figures 1, 2 qui représentent :
- figure 1, un exemple de dispositif pour le dégraissage des moules,
- figure 2, une représentation schématique d'un dispositif permettant le balayage du faisceau laser sur une partie des moules.

Les moules utilisés dans l'industrie verrière pour la fabrication de récipients en verre tels que bouteilles ou flacons sont de différents types. Il s'agit par exemple des moules ébaucheurs et des moules finisseurs. Ces moules sont soumis à des cadences de travail très importantes. Ils peuvent produire une bouteille toutes les cinq secondes environ. Pour maintenir de telles cadences ces moules sont continuellement refroidis, graissés revêtus d'agents démoulants, etc.. Tous ces éléments contribuent à l'encrassement des moules sur lesquels apparaissent des résidus, des dépôts graisseux ou organiques et tout type de salissures qu'il est nécessaire d'éliminer très régulièrement par un nettoyage adéquat.

Sur la figure 1, sont schématisées un ensemble de plusieurs cuves 1 dans lesquelles les moules 2 vont transiter successivement afin de subir un dégraissage total. Les moules 2 pouvant avoir des formes diverses, ils ont été représentés très simplement. Les moules 2 sont soumis au travers de ces différentes cuves 1 à des actions combinées d'effets de bains lessiviels et d'ultra-sons. Les bains comportent, par exemple, de la lessive de soude associée à des agents tensio-actifs. Le bain lessiviel possède par exemple un pH voisin de 14. La présence de plusieurs cuves 1 est nécessaire pour éventuellement autoriser des passages dans un bain lessiviel puis dans un bain de rinçage puis dans un bain de passivation ou de "déwatering" c'est-à-dire qui évite une corrosion ultérieure. Ce type d'installation est par exemple du type de celle commercialisée par la Société FISA qui propose dans sa gamme des modèles VST, des installations adaptées au dégraissage de tels moules.

Après passage sur cette installation, les dépôts de matière grasse ou organique qui recouvrent généralement toute la surface des moules, sont éliminés. Les moules 2 comportent souvent des endroits, non visibles sur les figures, très difficiles d'accès pour effectuer un nettoyage. Ces zones difficiles d'accès, sont plus particulièrement les gorges et les ailettes présentes sur la surface externe des moules ou bien les zones permettant l'emboîtement ou l'accrochage des différentes parties du moule. Ce type de nettoyage où les moules 2 sont placés dans des bains permet d'éliminer les dépôts de graisse ou de matière organique y compris dans ces zones.

Par ailleurs, ce type de nettoyage n'entraîne aucune dégradation ou érosion des matériaux constituant les moules.

Les vitesses de nettoyage de cette technique sont tout à fait compatibles avec les cadences requises dans l'industrie verrière. De plus, il est possible d'associer à ces cuves 2, un ensemble robotisé de paniers 3 qui va permettre d'assurer le transfert des moules 2 d'une cuve l à une autre. Ces paniers 3 sont supportés par des crochets 4 manoeuvrés par des robots de manutention, non représentés, suspendus à un rail de guidage 5 placé au-dessus des cuves 1. Ce dispositif permet également le transfert des moules 2 à la seconde installation sur laquelle il sera revenu par la suite, lors de la description de la figure 2.

A la fin de cette première étape, c'est-à-dire après passage des moules 2 dans les cuves 1, une partie importante des résidus qui les recouvrait après utilisation, a été éliminée. Par contre, il apparaît que sur les zones en contact avec le verre chaud, c'est-à-dire la cavité ou empreinte du moule, il subsiste une fine couche de résidus résultant, a priori, de la corrosion du métal du moule.

Ces résidus ont une dureté supérieure à celle des métaux constituant les moules. Il est donc très délicat de les éliminer sans détériorer la surface des moules. De plus, la fine couche de résidus n'est pas homogène et le traitement qui lui est appliqué s'attaque simultanément à la surface métallique du moule. En effet, beaucoup de techniques notamment mécaniques telles que microbillage, sablage ou grenaillage, permettant d'éliminer cette fine couche de résidus, conduisent simultanément à une usure de la surface du moule. Cette usure qui se répète à chaque nettoyage devient la principale cause d'usure et peut contribuer à une augmentation de la consommation de verre, une augmentation des risques de défauts lors du démoulage et à une diminution de la durée d'utilisation possible de ces moules.

La seconde phase de nettoyage illustrée sur la figure 2 permet d'éviter ces inconvénients. Sur cette figure 2, le rail 5 n'est pas représenté mais il permet tout de même de conduire les moules 2, à l'aide des chariots 3 également non représentés, au poste de travail de la seconde étape du nettoyage.

Les moules 2 sont déposés sur un plan de travail 6 qui laisse subsister un passage 7. Au travers de ce passage 7, passe un tube creux 8 muni d'un orifice 9 et associé à un jeu de miroirs 10. Ce tube 8 est comparable à un périscope.

Ce tube 8 peut être animé d'un mouvement de translation verticale dans les deux sens et d'un mouvement de rotation par un système de motorisation non représenté sur la figure 2.

Une source 11 schématiquement représentée émet un faisceau laser 12 qui est transmis au sein du tube 8 par les miroirs 10 et réémis au niveau de l'orifice 9. L'émission de ce faisceau 12 par l'orifice 9 associé aux mouvements du tube 8 permet un balayage complet de la surface de l'empreinte du moule. L'association des deux mouvements peut en effet permettre de communiquer à l'orifice 9 un mouvement hélicoïdal dont le pas est choisi tel que le faisceau laser couvre toute la surface de l'empreinte du moule 2.

Le laser utilisé est du type YAG dopé au néodyme tel que celui décrit dans le brevet d'invention français 2 641 718.

Cette seconde phase de nettoyage, décrite sur la figure 2, permet d'éliminer la fine couche de résidus qui résiste à la première phase de nettoyage lors du passage dans les cuves 1. De plus, la surface du moule reste intacte après ce nettoyage et ne présente pas d'usure. En effet, contrairement à d'autres techniques qui consistent à détruire ces résidus, la technique de nettoyage par laser consiste à s'attaquer à l'interface résidus-métal. Or, il apparaît que cette interface présente une résistance inférieure à celle de la fine couche de résidus et à celle du métal constituant le moule 2. Il est donc possible de rompre cette interface sans altérer le métal.

Pour cela, le faisceau laser crée un échauffement rapide à volume constant qui crée une onde de pression qui entraîne la rupture de cette interface.

Pour éviter que la fine couche de résidus ainsi détachée ne vienne encrasser les dispositifs placés sous le plan de travail 6, un système d'aspiration 13 entraîne ces résidus.

Le dispositif ainsi décrit à l'aide des figures 1 et 2 permet un nettoyage total de la surface des moules sans dégradation de cette surface. De plus, un tel dispositif est tout à fait compatible avec les cadences requises par l'industrie verrière pour le nettoyage des moules. En effet, la seconde phase, c'est-à-dire le balayage laser, étant limitée au nettoyage de l'empreinte du moule, c'est-à-dire là où se forme la couche résultant de la corrosion du métal du moule, le temps de traitement est bien moins important que s'il fallait traiter toute la surface du moule. De plus, l'empreinte est très facile d'accès pour le faisceau laser et ne nécessite donc pas d'outillage spécial ou de manoeuvre compliquée.

Le nettoyage selon l'invention présente en outre l'avantage de pouvoir augmenter la durée d'utilisation d'un même moule sur une machine de formage. En effet, l'usure lors du nettoyage étant quasi-inexistante, les moules peuvent être nettoyés un nombre de fois plus important avant d'être mis au rebut et peuvent ainsi être utilisés plus longtemps, avec une bonne qualité, notamment un bon état de surface, des produits finis.

## Revendications

1. Procédé de nettoyage de moules de verrerie, consistant en au moins une étape d'élimination des grasses ou matières organiques et au moins une étape de nettoyage, par photo-ablation par impact laser (12), ledit laser étant associé à des moyens de type périscope (8-10) permettant un accès à des recoins et gorges à l'intérieur des moules (2).

2. Procédé selon la revendication 1, caractérisé en ce que l'élimination des graisses ou matières organiques est réalisée par une technique combinant l'action de bains lessiviels, notamment basiques, et l'action d'ultra-sons.

3. Procédé selon l'une des revendications précédentes, caractérisé en ce que l'impact laser est obtenu par un faisceau laser délivrant une densité de puissance crête comprise entre quelques mégawatts par cm² et quelques dizaines de mégawatts par cm², par impulsion d'une durée comprise entre quelques nanosecondes et quelques dizaines de nanosecondes et possédant une fréquence de tir ajustable de 0 à 30 Hz.

4. Dispositif pour le nettoyage d'éléments solides tels que des moules de verrerie (2) comprenant d'une part des moyens (1) assurant l'élimination des grasses ou matières organiques et d'autre part un laser (11) associé à des moyens de type périscope (8-10) orientant le rayon (12) sur au moins la surface des moules (2) en contact avec le verre chaud.

5. Dispositif selon la revendication 4, caractérisé en ce que les moyens d'élimination des graisses ou matières organiques sont une série de cuves (1) combinant des effets de bains comprenant une base et des agents tensioactifs et d'ultra-sons.

6. Dispositif selon la revendication 4 ou 5, caractérisé en ce que le laser est un laser YAG (11) dopé au néodyme d'une longueur d'onde de 1,06 microns délivrant une énergie d'environ 500 millijoules par impulsion d'une durée comprise entre quelques nanosecondes et quelques dizaines de nanosecondes, et de préférence entre 10 et 30 nanosecondes, et possédant une fréquence de tir ajustable de 0 à 30 Hz.

7. Dispositif selon l'une des revendications 4 à 6, caractérisé en ce qu'un dispositif (8, 9, 10) assure le balayage du faisceau laser (12) sur des moules immobiles (2).

8. Dispositif selon l'une des revendications 4 à 7, caractérisé en ce qu'un robot, des paniers (3) assurent le déplacement des moules (2) lors du nettoyage.

9. Application du procédé de nettoyage d'éléments solides selon l'une des revendications 1 à 3 à des éléments comportant au moins partiellement une fine couche de résidus plus dure que les éléments, et une couche molle et plus épaisse, telle que des matières grasses ou organiques.

## Claims

1. Process for cleaning glass-making moulds, comprising at least one step in which lubricants or organic matter are removed and at least one cleaning step, by photo-ablation by laser impact (12), the said laser being associated with periscope-type means (8-10) which allow access to the innermost recesses and grooves inside the moulds (2).

2. Process according to claim 1, characterised in that the removal of the lubricants or organic matter is carried out by a technique that combines the action of detergent, especially basic, baths and the action of ultrasound.

3. Process according to one of the preceding claims, characterised in that the laser impact is obtained by a laser beam that delivers a maximum power density of from several megawatts per cm² to several tens of megawatts per cm², in impulses having a duration of from several nanoseconds to several tens of nanoseconds, and that has an adjustable shooting frequency of from 0 to 30 Hz.

4. Device for cleaning solid elements, such as glass-making moulds (2), comprising, on the one hand, means (1) for removing lubricants or organic matter and, on the other hand, a laser (11) associated with periscope-type means (8-10) that direct the beam (12) onto at least the surface of the moulds (2) that is in contact with the hot glass.

5. Device according to claim 4, characterised in that the means for removing the lubricants or organic matter are a series of vessels (1) that combine the effect of baths containing a base and surface-active agents and the effect of ultrasound.

6. Device according to claim 4 or 5, characterised in that the laser is a neodymium-doped YAG laser (11) having a wavelength of 1.06 microns that delivers an energy of approximately 500 millijoules in impulses having a duration of from several nanoseconds to several tens of nanoseconds, and preferably from 10 to 30 nanoseconds, and that has an adjustable shooting frequency of from 0 to 30 Hz.

7. Device according to one of claims 4 to 6, characterised in that a device (8, 9, 10) causes the laser beam (12) to sweep over fixed moulds (2).

8. Device according to one of claims 4 to 7, characterised in that a robot,* baskets (3) move the moulds (2) during cleaning.

9. Application of the process for cleaning solid elements according to one of claims 1 to 3 to elements comprising at least partially a fine layer of residues that is harder than the elements, and a soft and thicker layer, such as greasy or organic matter.

## Patentansprüche

1. Verfahren zur Reinigung von Glashüttenformen, bestehend aus zumindest einer Phase der Entfernung von Fetten oder organischen Materialien und zumindest einer Phase der Reinigung durch Photo-Abtragung durch Lasereinwirkung (12), wobei der Laser mit Periskopeinrichtungen (8-10) verbunden ist, die einen Zugang zu Winkeln und Einschnitten im Inneren der Form erlauben.

2. Verfahren nach Anspruch 1, dadurch gekennzeichnet, daß die Entfernung von Fetten oder organischen Materialien durch eine Technik realisiert wird, die die Wirkung von Waschbädern, insbesondere basischen, sowie die Wirkung von Ultraschall kombiniert.

3. Verfahren nach einem der vorhergehenden Ansprüche, dadurch gekennzeichnet, daß die Lasereinwirkung durch ein Laserbündel erzielt wird, das eine Höchstleistungsdichte liefert, die zwischen einigen Megawatt pro cm² und einigen Dutzend Megawatt pro cm² liegt, durch Impulsion einer Dauer, die zwischen einigen Naosekunden und einigen Dutzend Nanosekunden liegt, und eine zwischen 0 und 30 Hz einstellbare Schußfrequenz hat.

4. Vorrichtung für die Reinigung fester Elemente, wie z.B. Glashüttenformen (2), einerseits mit Einrichtungen (1), die der Elimination von Fetten oder organischen Materialien dienen und andererseits mit einem Laser (11), der mit Periskopeinrichtungen (8-10) verbunden ist, die den Strahl (12) auf zumindest die Oberfläche der Formen (2) richtet, die in Kontakt mit dem heißen Glas stehen.

5. Vorrichtung nach Anspruch 4, dadurch gekennzeichnet, daß die Einrichtungen zur Entfernung von Fetten oder organischen Materialien eine Reihe von Becken (11) sind, die die Effekte von Bädern, die eine Base sowie tensioaktive Mittel umfassen, mit denen von Ultraschall kombinieren.

6. Vorrichtung nach Anspruch 4 oder 5, dadurch gekennzeichnet, daß der Laser eine YAG-Laser (11) ist, der mit Neodym einer Wellenlänge von 1,06 Micron verstärkt ist und der eine Energie von ungefähr 500 Millijoules durch Impulsion einer Dauer zwischen einigen Nanosekunden und einigen Dutzend Nanosekunden sowie bevorzugt zwischen 10 und 30 Nanosekunden liefert, und eine zwischen 0 und 30 Hz einstellbare Schußfrequenz hat.

7. Vorrichtung nach einem der Ansprüche 4 bis 6, dadurch gekennzeichnet, daß eine Einrichtung (8, 9, 10) das Abtasten der unbeweglichen Formen (2) durch das Laserbündel (12) sichert.

8. Vorrichtung nach einem der Ansprüche 4 bis 7, dadurch gekennzeichnet, daß ein Roboter mit Körben (3) die Bewegungen der Formen (2) bei der Reinigung sichert.

9. Verwendung des Verfahren der Reinigung von festen Elementen nach einem der Ansprüche 1 bis 3 bei Elementen, die zumindest teilweise eine feine Schicht von Rückständen tragen, die härter sind als die Elemente und eine weiche und dickere Schicht, wie z.B. fettige oder organische Materialien.
